# EUROPEAN PATENT APPLICATION

(11) **EP 4 597 655 A1**
(43) Date of publication of application: **06.08.2025**
(21) Application number: 24215494.6
(22) Date of filing: 26.11.2024
(51) Int. Cl.: H01M 10/04, H01M 10/052, H01M 10/0587, H01M 10/643, H01M 10/6552, H01M 10/6562, H01M 50/107, H01M 50/152, H01M 50/213, H01M 50/548

(54) **RECHARGEABLE BATTERY AND BATTERY MODULE**

(30) Priority: 05.02.2024 KR 20240017629
(71) Applicant: SAMSUNG SDI CO., LTD., Yongin-si, Gyeonggi-do 17084 (KR)
(72) Inventor: Jeong, Areum, Yongin-si, Gyeonggi-do 17084 (KR)
(74) Representative: Gulde & Partner

(57) **Abstract**

A rechargeable battery includes a wound-type electrode assembly, a heat pipe, a can, and a cap plate. The heat pipe is disposed inside of the electrode assembly at a distance from a wound center of the electrode assembly, and the heat pipe surrounds the wound center. The can includes an internal space in which the electrode assembly and the heat pipe are positioned. The cap plate is coupled to an end of an opening of the can to close and seal the can, the cap plate is connected heat pipe, and the cap plate is configured to provide dissipation of heat from the heat pipe.

## Description

### BACKGROUND

### (a) Field

The present invention relates to a rechargeable battery. More particularly, the present invention relates to a rechargeable battery provided with a cooling structure for an electrode assembly, and a battery module.

### (b) Description of the Related Art

Rechargeable batteries are used for a variety of purposes, such as powering a small electronic devices such as mobile phones and a laptop computers. Rechargeable batteries also power motors for transportation vehicles such as electric and hybrid vehicles. In the latter cases, a battery module formed by a plurality of cylindrical rechargeable batteries may be used, and there is a trend to enlarge a diameter of an electrode assembly to provide large capacity.

In a large-diameter cylindrical rechargeable battery, a heat transfer coefficient in the lateral direction (radial direction) is less than a heat transfer coefficient in the longitudinal direction (length direction) such that a temperature at the center of the battery tends to increase. A temperature difference inside the rechargeable battery should not be more than 10 °C. But in high output conditions of 2C-rate or higher, the temperature at the center of the battery significantly increases, thereby causing a temperature difference of more than 10 °C. In such a case, the performance of the rechargeable battery may deteriorate and the battery's lifespan may be shortened.

### SUMMARY

The present invention is set out in the appended set of claims, wherein the drawings and respective description relate to advantageous embodiments thereof. The present invention provides a rechargeable battery and a battery module that can have internal temperature uniformity by lowering a temperature at a center of the battery and thereby have improved performance and lifespan.

A rechargeable battery according to an embodiment includes a wound-type electrode assembly; a heat pipe that is disposed inside of the electrode assembly at a distance from a wound center of the electrode assembly, the heat pipe surrounding the wound center; a can having an internal space in which the electrode assembly and the heat pipe are positioned; and a cap plate that closes and seals the can by being coupled to an end at an open side of the can, the cap plate being connected to the heat pipe, and the cap plate being configured to dissipate heat from the heat pipe.

The electrode assembly may include an inner portion positioned between the wound center and the heat pipe and an outer portion positioned between the heat pipe and a side of the can. The heat pipe may have a cross-sectional shape of a circular arc, and be cylindrical in shape with an open portion parallel to a length direction of the heat pipe. The electrode assembly may be formed of a laminate including a first electrode, a separator, and a second electrode wound multiple times, and the laminate may extend through the open portion of the heat pipe, and the inner portion of the electrode assembly and the outer portion of the electrode assembly may be connected through the open portion.

The heat pipe may be formed in the shape of a cylinder, and the inner portion of the electrode assembly and the outer portion of the electrode assembly may be separated from each other. The inner portion and the outer portion each may include a first uncoated region and a second uncoated region disposed on the opposite side of the first uncoated region. The first uncoated regions may be fixed to a first current collecting plate, and the second uncoated regions may be fixed to a second current collecting plate.

The rechargeable battery may further include a current collecting plate disposed on one side of the electrode assembly and facing the cap plate. An opening formed in the shape of a circular arc may be formed in the current collecting plate, and the heat pipe extends through the opening. The heat pipe may have a cross-sectional shape of a circular arc and be cylindrical in shape with an open portion parallel to the length direction of the heat pipe. The heat pipe may be formed in the shape of a cylinder, and a concave groove that extends parallel to a length direction of the heat pipe may be formed on one end of the heat pipe, with the groove facing the cap plate.

The rechargeable battery may include a plurality of heat pipes. The plurality of heat pipes may include an inner heat pipe and an outer heat pipe, with the inner heat pipe and the outer heat pipe having different diameters. A part of the electrode assembly may be disposed between the inner heat pipe and the outer heat pipe.

A rechargeable battery according to another embodiment includes a wound-type electrode assembly, a can, a can plate, and a current collecting plate. The rechargeable battery also includes a first heat pipe disposed at a wound center of the electrode assembly and at least one of second heat pipe disposed inside the electrode assembly, with the at least one second heat pipe surrounding the first heat pipe. The can has an internal space in which the electrode assembly, the first heat pipe, and the at least one second heat pipe are positioned. The cap plate is coupled to an end at an open side of the can and closes and seals the can, the cap plate is connected to the first heat pipe and the at least one second heat pipe, and the cap plate is configured to dissipate heat from the first heat pipe and the at least one second heat pipe. The current collecting plate is disposed on one side of the electrode assembly, faces the cap plate, and provided with a first opening through which the first heat pipe extends and at least one second opening through which the at least one second heat pipe extends.

The at least one second heat pipe has a cross-sectional shape of a circular arc, and is cylindrical in shape with an open portion parallel to a length direction of the at least one second heat pipe. The electrode assembly may be formed as one structure extending from the wound center to the outward.

On the other hand, the at least one second heat pipe is cylindrical in shape, and a plurality of the electrode assembly is provided, with a first part of the electrode assembly and a second part of the electrode assembly being separated by the at least one second heat pipe. Each of the electrode assemblies may include uncoated regions disposed toward the current collecting plate, and the uncoated regions may be fixed to the current collecting plate.

The first opening may be formed in the shape of a circle, and the at least one second opening may be formed in the shape of a circular arc. The at least one second heat pipe may include an inner heat pipe and an outer heat pipe having different diameters. A part of the electrode assembly may be positioned between the inner heat pipe and the outer heat pipe.

A battery module according to an embodiment includes a plurality of rechargeable batteries that are electrically connected to each other, and a cooling device that is connected to the plurality of rechargeable batteries. Each of the rechargeable batteries includes: a wound-type electrode assembly; a heat pipe that is disposed inside of the electrode assembly, the heat pipe surrounding the wound center; a can having an internal space in which the electrode assembly and the heat pipe are positioned; and a cap plate that is coupled to an end of the can to close and seal the can, the cap plate being connected to the heat pipe. The cooling device may include a chiller that contacts an outer surface of the cap plate.

Each of the rechargeable batteries may include a plurality of heat pipes. The plurality of heat pipes may include an inner heat pipe and an outer heat pipe, with the inner heat pipe and the outer heat pipe having different diameters. A part of the electrode assembly may be disposed between the inner heat pipe and the outer heat pipe. Each of the plurality of rechargeable batteries may further include a center heat pipe disposed on the wound center of the electrode assembly.

According to the embodiments, an internal temperature difference of the rechargeable battery may be maintained below 10 °C by the heat pipe and the cooling device. The rechargeable batteries may increase capacity by enlarging the diameter of the electrode assembly, and can improve performance and lifespan by ensuring the temperature uniformity below 10 °C.

### BRIEF DESCRIPTION OF THE DRAWINGS

FIG. 1 is a perspective view of a rechargeable battery according to a first embodiment.
FIG. 2 is a cross-sectional view of the rechargeable battery shown in FIG. 1.
FIG. 3 is a partial enlarged view of FIG. 2.
FIG. 4 is a partially exploded perspective view of the rechargeable battery shown in FIG. 2.
FIG. 5 is a cross-sectional view of a coupled state of the electrode assembly and the heat pipe shown in FIG. 4.
FIG. 6 is a cross-sectional view of the heat pipe shown in FIG. 4.
FIG. 7 is a partially exploded perspective view of a rechargeable battery according to a second embodiment.
FIG. 8 is a cross-sectional view of a coupling state of an electrode assembly and a heat pipe shown in FIG. 7.
FIG. 9 is a cross-sectional view of a rechargeable battery according to a third embodiment.
FIG. 10 and FIG. 11 are partially exploded perspective views of the rechargeable battery shown in FIG. 9.
FIG. 12 is a cross-sectional view of a rechargeable battery according to a fourth embodiment.
FIG. 13 and FIG. 14 are partially exploded perspective views of the rechargeable battery shown in FIG. 12.
FIG. 15 shows a temperature distribution of a rechargeable battery according to a comparative example.
FIG. 16 shows a temperature distribution of a rechargeable battery according to an embodiment.
FIG. 17 is a schematic diagram of a battery module according to an embodiment.

### DETAILED DESCRIPTION OF THE EMBODIMENTS

The present invention is described more fully hereinafter with reference to the accompanying drawings in which embodiments are shown.

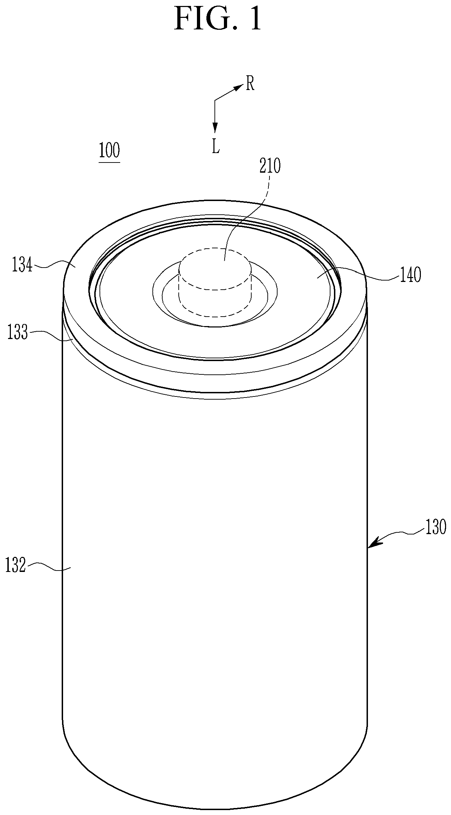

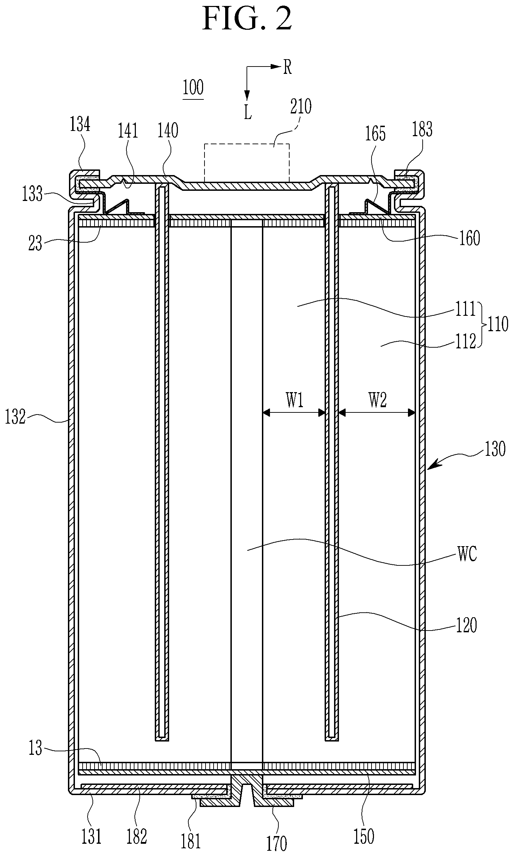

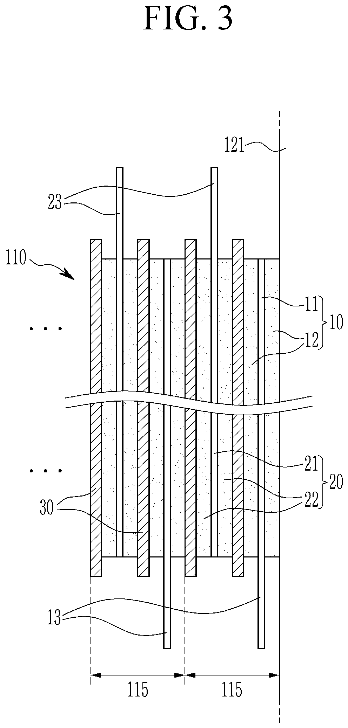

FIG. 1 is a perspective view of a rechargeable battery according to a first embodiment, and FIG. 2 is a cross-sectional view of the rechargeable battery shown in FIG. 1. FIG. 3 is a partial enlarged view of FIG. 2.

Referring to FIG. 1 to FIG. 3, a rechargeable battery 100 according to the present embodiment may include an electrode assembly 110, a heat pipe 120 disposed in the electrode assembly 110, a can 130 that receives the electrode assembly 110 and the heat pipe 120 therein, and a cap plate 140 that is coupled to an end of an open side of the can 130 and seals the can 130. The cap plate 140 may be connected to the heat pipe 120 and may serve as a heat dissipating plate that radiates heat to outside of the battery 100. The rechargeable battery 100 may further include a first current collecting plate 150, a second current collecting plate 160, and a rivet terminal 170.

The electrode assembly 110 may be a wound-type electrode assembly. Specifically, the electrode assembly 110 may be formed from a strip-shaped laminate 115 wound in a jelly roll shape. The laminate 115 may be formed by sequentially stacking a first electrode 10, a separator 30, a second electrode 20, and a separator 30. The positions of the first electrode 10 and the second electrode 20 may be switched in the laminate 115. The electrode assembly 110 may be received in an internal space of the can 130 together with an electrolyte solution.

In an embodiment, the electrode assembly 110 may be formed of a laminate 115. The laminate 115 may include the first electrode 10, the separator 30, and the second electrode 20 wound multiple times.

The first electrode 10 may include a first substrate 11 and a first composite layer 12 disposed on the first substrate 11. The first composite layer 12 may be disposed on both sides of the first substrate 11 except for one (e.g., lower) edge. The one (e.g., lower) edge of the first substrate 11 that is not covered with the first composite layer 12 may be referred to as a first uncoated region 13.

The second electrode 20 may include a second substrate 21 and a second composite layer 22 disposed on the second substrate 21. The second composite layer 22 may be disposed on both sides of the second substrate 21 except for the other (e.g., upper). The other (e.g., upper) edge of the second substrate 21 that is not covered with the second composite layer 22 may be referred to as a second uncoated region 23.

In a lithium ion rechargeable battery, the first substrate 11 may be formed of aluminum foil, and the first composite layer 12 may include a transition metal oxide such as LiCoO₂, LiNiO₂, LiMn₂O₄, Li(NiCoAl)O₂, LiFePO₄, Li(NiCoMn)O₂, and the like, a conductive material, a binder, and the like. The second substrate 21 may be formed of copper foil or nickel foil, and the second composite layer 22 may include graphite, a conductive material, a binder, and the like. The first electrode 10 may be referred to as a positive electrode, and second electrode 20 may be referred to as a negative electrode.

The separator 30 may be formed of a porous substrate, or may be formed of a porous substrate with a coating layer disposed on at least one side of the porous substrate. The porous substrate may include one or more of polyethylene, polypropylene, polyethylene terephthalate, polypropylene terephthalate, polybutylene terephthalate, polyester, polycarbonate, and polyimide. The coating layer may include a binder, and the binder may include a polyvinylidene fluoride-based compound. The separator 30 may insulate the first electrode 10 and the second electrode 20 while allowing movement of lithium ions.

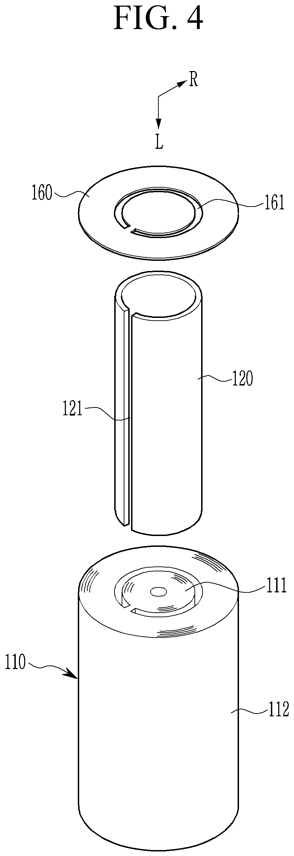

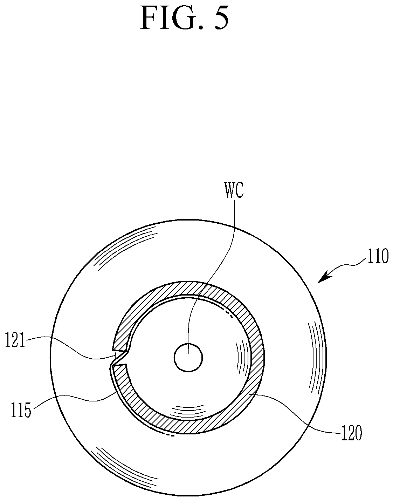

FIG. 4 is a partially exploded perspective view of the rechargeable battery shown in FIG. 2, and FIG. 5 is a cross-sectional view of a coupled state of the electrode assembly and the heat pipe shown in FIG. 4.

Referring to FIG. 1 to FIG. 5, a center pin may be positioned at a wound center WC of the electrode assembly 110, or the center pin may be removed leaving an empty space. FIG. 2 and FIG. 5 illustrate the latter case as an example. The heat pipe 120 may be disposed inside the electrode assembly 110 at a distance from the wound center WC of the electrode assembly 110, and may surround the wound center WC. The heat pipe 120 may be roughly cylindrical in shape and may have an open structure for passage of the laminate 115.

The laminate 115 is wound multiple times around the center pin, and the heat pipe 120 is placed on an outer side of the wound laminate. The laminate 115 passes through an open portion 121 of the heat pipe 120 and thus is drawn out to the outside of the heat pipe 120, and the laminate 115 is wound multiple times around the heat pipe 120 to thereby form the electrode assembly 110. After that, the center pin may be removed.

The heat pipe 120 may be formed in the shape of a circular arc or a C-shape (when the heat pipe 120 is viewed from above), and the laminate 115 passes through the open portion 121, thereby enabling continuous winding of the laminate 115. The open portion 121 of the heat pipe 120 may be parallel to a length direction L of the rechargeable battery 100. Thus, the heat pipe 120 has a cross-sectional shape of a circular arc and is cylindrical in shape with an open portion 121 parallel to the length direction of the heat pipe 120. The heat pipe 120 may be provided with the open portion 121 of a minimum width for passing the laminate 115, thereby maximizing a contact area with the laminate 115.

The electrode assembly 110 may be divided into an inner portion 111 disposed between the wound center WC and the heat pipe 120 (i.e., inside of the heat pipe 120), and an outer portion 112 disposed at an outside of the heat pipe 120. Since the laminate 115 passes through the open portion 121 of the heat pipe 120, the inner portion 111 and the outer portion 112 are connected as one. The laminate 115 may extend through the open portion 121 of the heat pipe 120, with the inner portion 111 of the electrode assembly 110 and the outer portion 112 of the electrode assembly 110 being connected through the open portion 121.

The inner portion 111 of the electrode assembly 110 and the outer portion 112 of the electrode assembly 110 may be separated from each other.

A width W1 of the inner portion 111 and a width W2 of the outer portion 112 in a radial direction R of the rechargeable battery 100 may be set to be the same or similar to each other. For example, a ratio of the width W2 to the width W1 may be in a range of 0.8 to 1.2, but is not limited to this example.

One (e.g., upper) end of the heat pipe 120 may protrude from the electrode assembly 110 toward the cap plate 140. On the other hand, the other (e.g., lower) end of the heat pipe 120 may be disposed inside of the electrode assembly 110.

The first current collecting plate 150 may contact the first uncoated region 13 of the electrode assembly 110, and the first current collecting plate 150 may be fixed to the first uncoated region 13 by welding and the like. The second current collecting plate 160 may overlap the second uncoated region 23 of the electrode assembly 110, and the second current collecting plate 160 may be fixed to the second uncoated region 23 by welding and the like. An opening 161 may be provided in the second current collecting plate 160 for allowing the heat pipe 120 to pass through the second current collecting plate 160. The opening 161 may be formed in the shape of a circular arc or a C-shape. In an embodiment, the opening 161 may be formed in the shape of a circular arc and may be formed in the current collecting plate 160, and the heat pipe 120 may extend through the opening 161.

As the heat pipe 120 may pass through the opening 161 of the second current collecting plate 160, and one (e.g., upper) end of the heat pipe 120 may be disposed above the second current collecting plate 160. The heat pipe 120 may be in contact with one side (e.g., lower surface) of the cap plate 140 and may be fixed to the cap plate 140.

The can 130 may have a shape with one side (e.g., upper side) open such that the electrode assembly 110, the first and second current collecting plates 150 and 160 may be inserted into the can 130. The can 130 may include a disc-shaped bottom portion 131 and a cylinder-shaped side portion 132 connected to an edge of the bottom portion 131. The bottom portion 131 may be referred to as a top portion when the top and bottom of the rechargeable battery 100 are changed. The can 130 may be made, for example, of steel, stainless steel, aluminum, or an aluminum alloy.

A terminal hole may be disposed at a center of the bottom portion 131, and a rivet terminal 170 may be installed in the terminal hole through a first insulator 181. The rivet terminal 170 may be coupled with the first current collecting plate 150, and the rivet terminal 170 may be charged to the same polarity as the first electrode 10 by the first current collecting plate 150 and serve as a first terminal (positive terminal).

The first insulator 181 insulates the rivet terminal 170 and the bottom portion 131 and seals the terminal hole to prevent leakage of the electrolyte solution. In this case, the second insulator 182 is disposed between the bottom portion 131 and the first current collecting plate 150 to insulate between the bottom portion 131 and the first current collecting plate 150.

The cap plate 140 may be coupled to an end of the side portion 132 via a third insulator 183. The side portion 132 may include a beading portion 133 and a crimping portion 134. The beading portion 133 may be a portion of the side portion 132 that is deformed concavely toward the inside of the side portion 132. The crimping portion 134 may be a portion formed by an end of the side portion 132 that is vertically bent toward the inside of the side portion 132.

An edge of the cap plate 140 may be compressed between the beading portion 133 and the crimping portion 134 via the third insulator 183, and the cap plate 140 may be firmly fixed between the beading portion 133 and the crimping portion 134. The cap plate 140 may be electrically non-polar.

A notch groove 141 may be disposed on an inner surface (e.g., lower surface) of the cap plate 140. The cross-section of the notch groove 141 may be V-shaped, and the notch groove 141 may be circular arc-shaped (when the cap plate 140 is viewed from below). The internal temperature of the rechargeable battery 100 may rise due to various causes such as rapid charge and discharge, external impact, and high temperature environment exposure. As the temperate rises, the internal pressure may rise due to vaporization of the electrolyte solution. When the pressure rises excessively, the cap plate 140 may break around the notch groove 141 and the internal gas may thereby be discharged.

The second current collecting plate 160 may include a connector 165 in contact with the inner surface of the beading portion 133. A plurality of connectors 165 may be provided around the edge of the second current collecting plate 160. The can 130 may be charged to the same polarity as the second electrode 20 by the connector 165 and may serve as a second terminal (negative terminal).

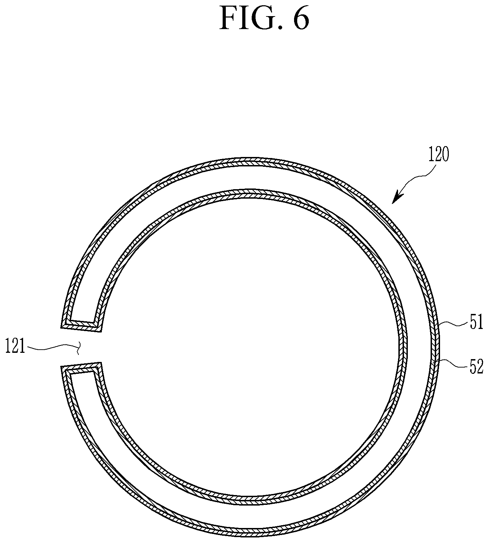

FIG. 6 is a cross-sectional view of the heat pipe shown in FIG. 4.

Referring to FIG. 6, the heat pipe 120 may include a main body 51 that provides a closed and sealed internal space, with a capillary structure layer 52 disposed on an inner surface of the main body 51An operation fluid may be injected into the internal space of the main body 51.

The main body 51 may be made of ceramics so as not to conduct electricity to the first and second electrodes 10 and 20, or may be made of a metal having an outer surface that is covered with an insulating material. The ceramics may include oxide-based ceramics such as alumina and zirconia or nitride-based ceramics such as AIN, Si₃N₄, and SiC. The insulating material may include polymer materials such as polyethylene (PE) and polypropylene (PP). The metal may include steel, stainless steel, copper, aluminum, and the like. The operation fluid may contain water or organic solvents such as acetone and alcohol. The capillary structure layer 52 has a fine structure that causes capillary action for the operation fluid.

Referring to FIG. 1 to FIG. 6, most of the heat pipe 120 may be disposed inside of the electrode assembly 110, and one end (e.g., upper end) of the heat pipe 120 may be in contact with the cap plate 140. A chiller 210 of a cooling device (which will be described later) may be disposed on an outer surface of the cap plate 140. One end (e.g., upper end) of the heat pipe 120 that is in contact with the cap plate 140 may become a lower temperature part of the heat pipe 120, and most of the heat pipe 120 that disposed inside the electrode assembly 110 may become a higher temperature part of the heat pipe 120.

When the internal temperature of the rechargeable battery 100 rises during the rapid charging and discharge process or when the rechargeable battery 100 is in an abnormal environment, the operation fluid in the higher temperature part of the heat pipe 120 may vaporize. The gaseous operation fluid moves to the lower temperature part of the heat pipe 120. The operation fluid that moves to the lower temperature part is cooled and condensed (liquefied) by the cap plate 140 and the cooling device (not shown). The liquid operation fluid moves back to the higher temperature part along the capillary structure layer 52. The operation fluid repeats vaporization and condensation to thereby lower the temperature of the electrode assembly 110.

Heat outside of the electrode assembly 110 may be dissipated to outside of the battery 100 through the side portion 132 of the can 130, but it is difficult for the heat inside the electrode assembly 110 to self-dissipated. In the present embodiment of the rechargeable battery 100, the heat pipe 120 may be disposed in a middle portion of the electrode assembly 110 to aid in lowering the internal temperature of the electrode assembly 110.

In the present embodiment, an internal temperature difference of the rechargeable battery 100 may be maintained below 10 °C by the heat pipe 120 and the cooling device. The rechargeable battery 100 of the present embodiment may increase capacity by having an enlarged diameter of the electrode assembly 110, and may improve performance and lifespan by securing temperature uniformity of 10 °C or less.

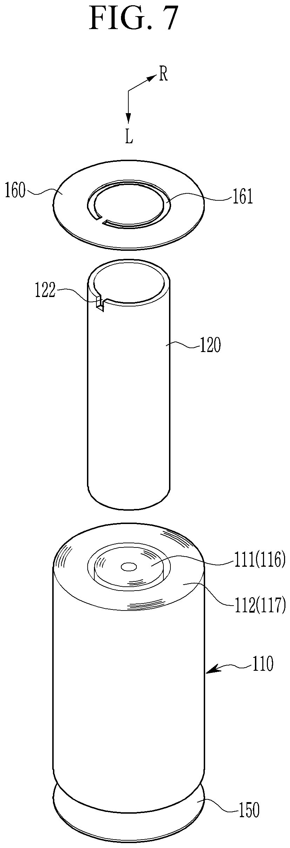

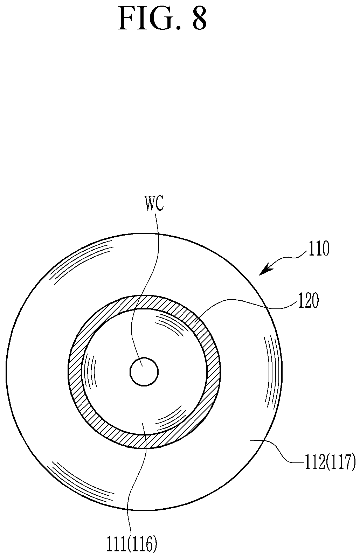

FIG. 7 is a partially exploded perspective view of a rechargeable battery according to a second embodiment, and FIG. 8 is a cross-sectional view of a coupling state of an electrode assembly and a heat pipe shown in FIG. 7. The rechargeable battery of the second embodiment has the same or similar configuration as the first embodiment described above, except for the aspects described below.

Referring to FIG. 7 and FIG. 8, in the present embodiment a heat pipe 120 may be formed in the shape of a cylinder. A first laminate 116 may be wound multiple times around a center pin, a heat pipe 120 may be placed on an outer side of the wound first laminate 116, and a second laminate 117 may be wound multiple times around the peat pipe 120 such that an electrode assembly 110 can be manufactured. After the windings, the center pin may be removed selectively.

The electrode assembly 110 may be divided into an inner portion 111 formed of the first laminate 116 and an outer portion 112 formed of the second laminate 117. The inner portion 111 and the outer portion 112 may be disconnected. A first current collecting plate 150 may be electrically connected to a first electrode by contacting both a first uncoated region of the first laminate 116 and a first uncoated region of the second laminate 117. A second current collecting plate 160 may be electrically connected to a second electrode by contacting both a second uncoated region of the first laminate 116 and a second uncoated region of the second laminate 117.

An opening 161 formed in the second current collecting plate 160 may have the same shape as that of the first embodiment described above. A concave groove 122 of a predetermined depth extending parallel to a length direction (L direction) may be disposed at one end (e.g., upper end) of the heat pipe 120 facing the cap plate. A portion of the heat pipe 120 that protrudes to the outside of the electrode assembly 110 may be formed in the shape of a circular arc or a C-shape and may extend through the opening 161 of the second current collecting plate 160.

The cylinder-shaped heat pipe 120 may implement improved cooling performance by expanding an area in contact with the electrode assembly 110 in comparison to the heat pipe of the first embodiment described above.

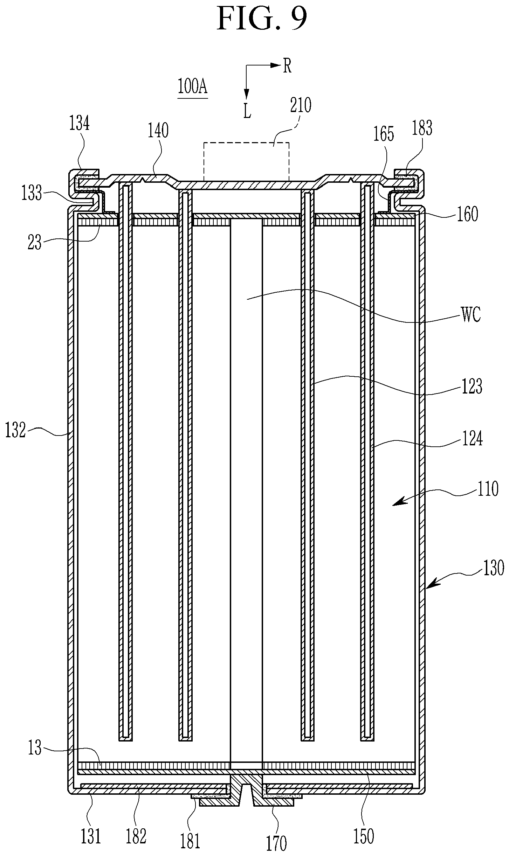

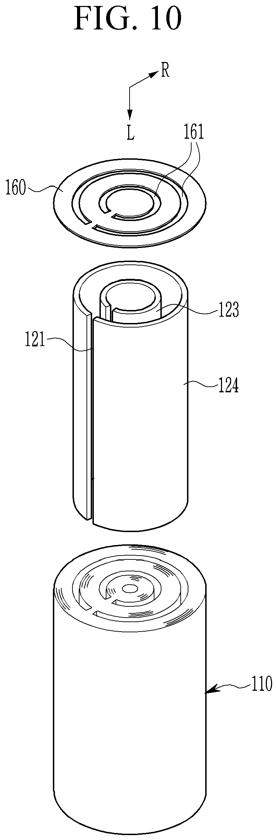

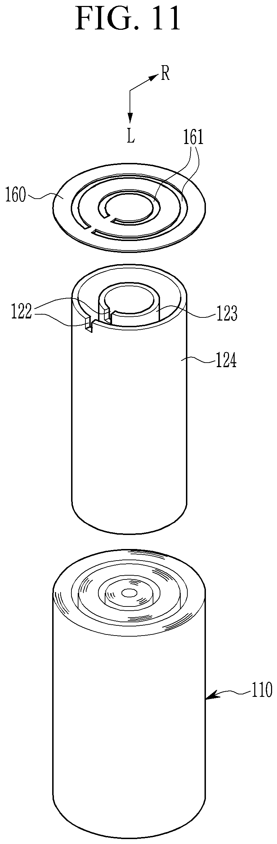

FIG. 9 is a cross-sectional view of a rechargeable battery according to a third embodiment, and FIG. 10 and FIG. 11 are partially exploded perspective views of the rechargeable battery shown in FIG. 9. The rechargeable battery of the third embodiment has the same or similar configuration as the first or second embodiment described above, except for the aspects described below.

Referring to FIG. 9 to FIG. 11, in a rechargeable battery 100A of the present embodiment, a plurality of heat pipes 123 and 124 may be provided, with the heat pipes 123 and 124 having different diameters. In the depicted embodiment the plurality of heat pipes 123 and 124 include an inner heat pipe 123 and an outer heat pipe 124. However, as the diameter of the electrode assembly 110 increases, the number of heat pipes may increase.

The plurality of heat pipes 123 and 124 may be disposed at a distance from each other along a radial direction (R direction) of the rechargeable battery 100A, and a plurality of openings 161 may be disposed in the second current collecting plate 160 through which the plurality of heat pipes 123 and 124 may extend.

In FIG. 10, the plurality of heat pipes 123 and 124 may be formed in the shape of a circular arc or a C-shape. In this case, the laminate may be wound continuously from a wound center outward to form an electrode assembly. In FIG. 11, the heat pipes 123 and 124 may be formed in the shape of a cylinder, and a concave groove 122 of a predetermined depth may be disposed at one end (e.g., upper end) in each of the plurality of heat pipes 123 and 124. In this case, three separated laminates may form the electrode assembly 110.

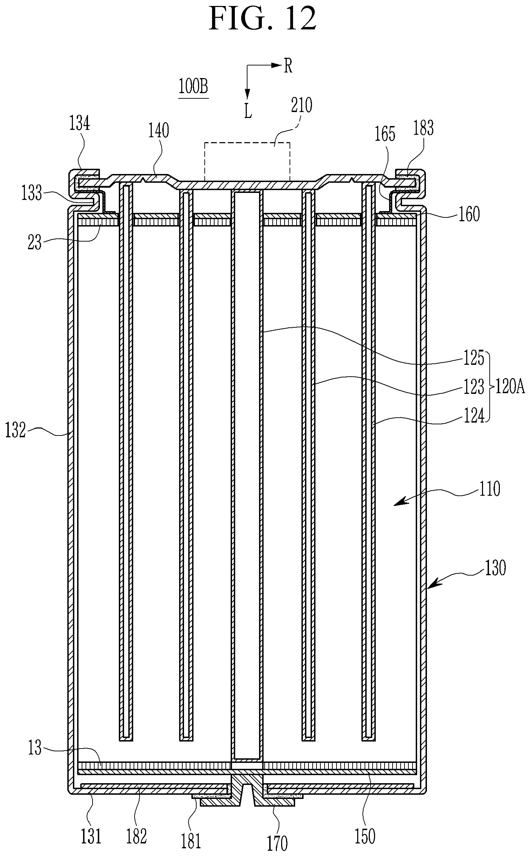

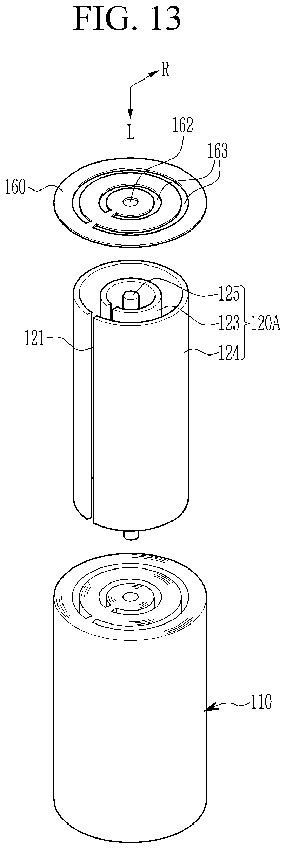

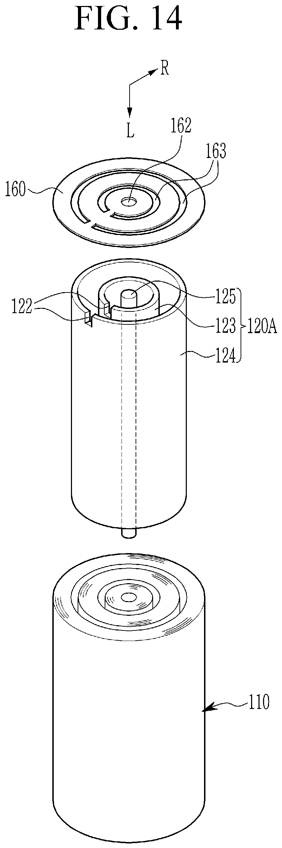

FIG. 12 is a cross-sectional view of a rechargeable battery according to a fourth embodiment, and FIG. 13 and FIG. 14 are partially exploded perspective views of the rechargeable battery shown in FIG. 12. The rechargeable battery of the fourth embodiment has the same or similar configuration as the first, second, or third embodiment described above, except for the aspects described below.

Referring to FIG. 12 to FIG. 14, a rechargeable battery 100B of the present embodiment may include multiple heat pipes 120A. The multiple heat pipes 120A may include a first heat pipe 125 disposed at a wound center of the electrode assembly 110, and at least one of second heat pipes 123 and 124 disposed inside of the electrode assembly 110. Here, a plurality of the electrode assembly 110 may be provided, with a first part of the electrode assembly 110 and a second part of the electrode assembly 110 being separated by the at least one second heat pipe 123 and 124. Each of the electrode assemblies 100 may comprise uncoated regions disposed toward the current collecting plate 160. The uncoated regions may be fixed to the current collecting plate 160. A cap plate 140 may be connected to the multiple heat pipes 120A and may function as a heat dissipating plate.

The first heat pipe 125 may be formed in the shape of a cylinder and may serve as the center pin described above. The first heat pipe 125 may be referred to as a central heat pipe. At least one of the second heat pipes 123 and 124 has the same configuration as the heat pipe of any one of the above-described first to third embodiments. FIG. 12 to FIG. 14 exemplarily illustrate that the second heat pipes 123 and 124 form an inner heat pipe 123 and an outer heat pipe 124.

Like the second heat pipes 123 and 124, the first heat pipe 125 may include a main body that provides a closed and sealed internal space, a capillary structure layer disposed on an inner surface of the main body, and an operation fluid injected into the internal space of the main body. A starting end of the wound electrode assembly 110 contacts the first heat pipe 125.

A first opening 162 for penetration of the first heat pipe 125 and second openings 163 for penetration of the second heat pipes 123 and 124 may be formed in the second current collecting plate 160. The first opening 162 may be formed in the shape of a circle, and the second openings 163 may be formed in the shape of a circular arc or a C-shape.

In the rechargeable battery 100B of the present embodiment, the first heat pipe 125 may be disposed at a center of the wound electrode assembly 110 to lower a temperature at a center of the electrode assembly 110. The second heat pipes 123 and 124 may be disposed at a middle of the electrode assembly 110 to lower a temperature at the middle of the electrode assembly 110. The rechargeable battery 100B of the present embodiment can more actively lower the temperature at the center of the electrode assembly 110 using the first heat pipe 125.

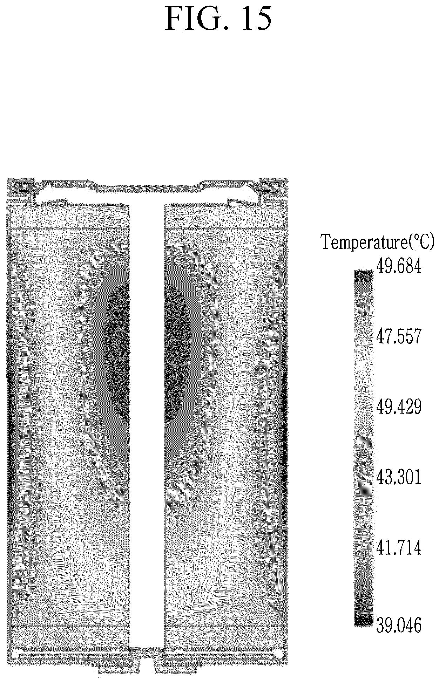

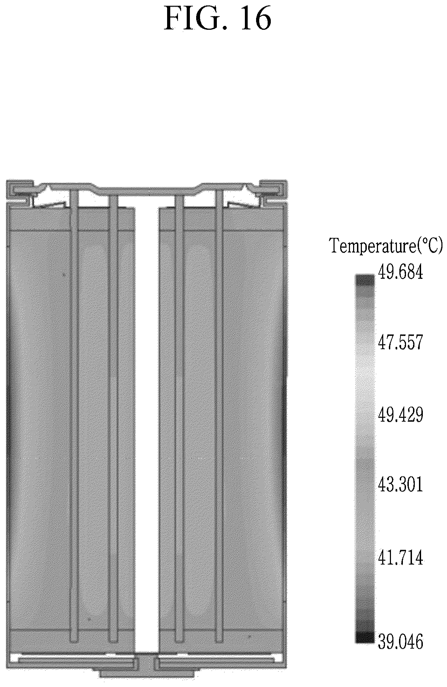

FIG. 15 is a simulation drawing that shows a temperature distribution of a rechargeable battery according to a comparative example that does not include a heat pipe. FIG. 16 is a simulation drawing that shows a temperature distribution of a rechargeable battery according to the third embodiment, which includes heat pipes. The operating conditions of the rechargeable battery in the comparative example and the rechargeable battery in the embodiment are the same, and it is assumed that there is no heat loss other than through the heat pipe and cooling by heat dissipation through the side of the can. The following Table 1 shows the operation conditions.

**(Table 1)**

| | |
|---|---|
| Initial temperature | 25 °C |
| Lateral direction heat transfer coefficient | 100 W/m²K (25 °C) |
| Operation current | 81A (27Ah assumed) |
| Operation time | 300 sec |

Referring to FIG. 15, in the rechargeable battery of the comparative example a temperature of a center of an electrode assembly is approximately 55 °C or higher, and a temperature of an outer portion of the electrode assembly in contact with a side of a can is approximately 40 °C. Thus, in the rechargeable battery of the comparative example, an internal temperature difference is more than 15 °C.

Referring to FIG. 16, in the rechargeable battery according to the third embodiment, a temperature of a center portion of the electrode assembly is approximately 42 °C and a temperature of an outer portion of the electrode assembly in contact of the side portion of the can is about 38 °C. Thus, the internal temperature difference in the rechargeable battery of the embodiment does not exceed 5 °C. The rechargeable battery of the embodiment can effectively lower the temperature at the center of the electrode assembly to ensure internal temperature uniformity.

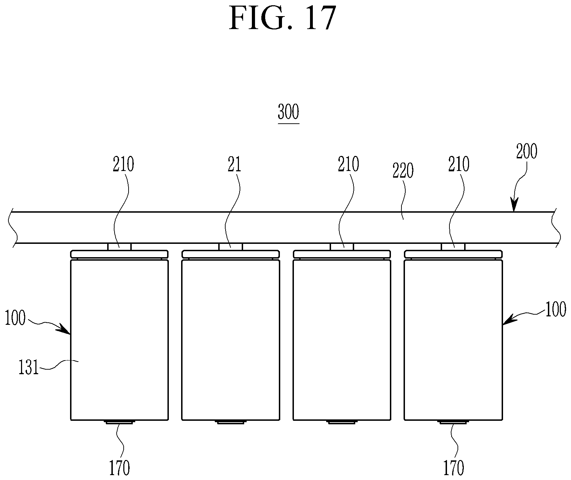

FIG. 17 is a schematic diagram of a battery module according to an embodiment.

Referring to FIG. 17, a battery module 30 according to the present embodiment may include a plurality of rechargeable batteries 100 and a cooling device 200 connected with the plurality of rechargeable batteries 100. The plurality of rechargeable batteries 100 may be formed of any one of the rechargeable batteries as described in the first to fourth embodiments above. The plurality of rechargeable batteries 100 may be connected in series, in parallel, or in a combination of series and in parallel by bus bars (not shown) to form a battery module.

The cooling device 200 may be a known air-cooled type or water-cooled type cooling device and may include a compressor, a condenser, a chiller, a controller, a circulation pump, and a circulation pipe. In FIG. 17, a chiller 210 and a circulation pipe 220 are shown among the various components of the cooling device 200. The chiller 210 may be formed of a plateshaped heat exchanger and is disposed in contact with an outer surface of a cap plate 140.

In an embodiment, each of the rechargeable batteries of the battery module 300 may include a plurality of heat pipes 123, 124. The plurality of heat pipes may include an inner heat pipe 123 and an outer heat pipe 124, the inner heat pipe 123 and the outer heat pipe 124 may have different diameters. A part of the electrode assembly 110 may be disposed between the inner heat pipe 123 and the outer heat pipe 124.

In an embodiment, each of the plurality of rechargeable batteries of the battery module 300 may further comprise a center heat pipe disposed at the wound center of the electrode assembly 110.

The battery module 300 of the present embodiment can prevent overheating of the rechargeable batteries 100 by using multiple heat pipes built into each of the plurality of rechargeable batteries 100 and cooling devices 200. Thus, temperature uniformity of each of the plurality of rechargeable batteries 100 can be maintained.

Although the exemplary embodiments have been described in detail, the scope of the present disclosure is not limited thereto, and various modifications and improvements made by one skilled in the art by using the basic concept of the present invention defined in the claims also fall within in the scope of the present invention.

## Claims

1. A rechargeable battery (100, 100A) comprising:
a wound-type electrode assembly (110);
a heat pipe (120) that is disposed inside of the electrode assembly (110) at a distance from a wound center (WC) of the electrode assembly (110), the heat pipe (120) surrounding the wound center (WC);
a can (130) having an internal space in which the electrode assembly (110) and the heat pipe (120) are positioned; and
a cap plate (140) that closes and seals the can (130) by being coupled to an end at an open side of the can (130), the cap plate (140) being connected to the heat pipe (120), and the cap plate (140) being configured to dissipate heat from the heat pipe (120).

2. The rechargeable battery (100, 100A) of claim 1, wherein the electrode assembly (110) comprises an inner portion (111) positioned between the wound center (WC) and the heat pipe (120) and an outer portion (112) positioned between the heat pipe (120) and a side of the can (130).

3. The rechargeable battery (100, 100A, 100B) of claim 1 or 2, wherein the heat pipe (120) has a cross-sectional shape of a circular arc, and is cylindrical in shape with an open portion (121) parallel to a length direction of the heat pipe (120).

4. The rechargeable battery (100, 100A) of claim 3, wherein the electrode assembly (110) is formed of a laminate (115) including a first electrode (10), a separator (30), and a second electrode (20) wound multiple times, and
wherein the laminate (115) extends through the open portion (121) of the heat pipe (120), with the inner portion (111) of the electrode assembly (110) and the outer portion (112) of the electrode assembly (110) being connected through the open portion (121).

5. The rechargeable battery (100, 100A) of claim 1 or 2, wherein the heat pipe (120) is formed in the shape of a cylinder, and
wherein the inner portion (111) of the electrode assembly (110) and the outer portion (112) of the electrode assembly (110) are separated from each other.

6. The rechargeable battery (100, 100A) of any of claims 2 to 5, wherein the inner portion (111) and the outer portion (112) each comprises a first uncoated region (13) and a second uncoated region (23) disposed on the opposite side of the first uncoated region (13),
wherein the first uncoated regions (13) are fixed to a first current collecting plate (150), and
wherein the second uncoated regions (23) are fixed to a second current collecting plate (160).

7. The rechargeable battery (100, 100A) of any of claims 1 to 6, further comprising a current collecting plate (160) disposed on one side of the electrode assembly (110) and facing the cap plate (140),
wherein an opening (161) formed in the shape of a circular arc is formed in the current collecting plate (160), and the heat pipe (120) extends through the opening (161).

8. The rechargeable battery (100, 100A) of claim 7, wherein the heat pipe (120) is formed in the shape of a cylinder, and
wherein a concave groove (122) that extends parallel to a length direction of the heat pipe (120) is formed on one end of the heat pipe (120), with the concave groove (122) facing the cap plate (140).

9. The rechargeable battery (100, 100A) of any of claims 1 to 8 wherein the rechargeable battery (100A) includes a plurality of heat pipes (123, 124),
wherein the plurality of heat pipes (123, 124) includes an inner heat pipe (123) and an outer heat pipe (124), the inner heat pipe (123) and the outer heat pipe (124) having different diameters, and
wherein a part of the electrode assembly (110) is disposed between the inner heat pipe (123) and the outer heat pipe (124).

10. A rechargeable battery (100B) comprising:
a wound-type electrode assembly (110);
a first heat pipe (125) disposed at a wound center (WC) of the electrode assembly (110);
at least one second heat pipe (123, 124) disposed inside the electrode assembly (110), the at least one second heat pipe (123, 124) surrounding the first heat pipe (125);
a can (130) having an internal space in which the electrode assembly (110), first heat pipe (125), and at least one second heat pipe (123, 124) are positioned;
a cap plate (140) that is coupled to an end at an open side of the can (130) and closes and seals the can (130), the cap plate (140) being connected to the first heat pipe (125) and at least one second heat pipe (123, 124), and the cap plate (140) being configured dissipate heat from the first heat pipe (125) and the at least one second heat pipe (123, 124); and
a current collecting plate (160) that is disposed on one side of the electrode assembly (110), faces the cap plate (140), and is provided with a first opening (162) through which the first heat pipe (125) extends and at least one second opening (163) through which the at least one second heat pipe (123, 124) extends.

11. The rechargeable battery (100B) of claim 10, wherein the at least one second heat pipe (123, 124) has a cross-sectional shape of a circular arc and is cylindrical in shape with an open portion (121) parallel to a length direction of the at least one second heat pipe (123, 124), and
wherein the electrode assembly (110) is formed as one structure extending from the wound center to the outward.

12. The rechargeable battery (100B) of claim 10, wherein the at least one second heat pipes (123, 124) is cylindrical in shape, and
wherein a plurality of the electrode assembly (110) is provided, with a first part of the electrode assembly (110) and a second part of the electrode assembly (110) being separated by the at least one second heat pipe (123, 124).

13. The rechargeable battery (100B) of claim 11 or 12, wherein the first opening (162) is formed in the shape of a circle and the at least one second opening (163) is formed in the shape of a circular arc.

14. The rechargeable battery (100B) of any of claims 11 to 13, wherein the at least one second heat pipe (123, 124) includes an inner heat pipe (123) and an outer heat pipe (124) having different diameters, and
wherein a part of the electrode assembly (110) is positioned between the inner heat pipe (123) and the outer heat pipe (124).

15. A battery module (300) comprising:
a plurality of rechargeable batteries that are electrically connected to each other; and
a cooling device (200) that is connected to the plurality of rechargeable batteries,
wherein each of the rechargeable batteries comprises:
a wound-type electrode assembly (110);
a heat pipe (120) that is disposed inside of the electrode assembly (110), the heat pipe (120) surrounding a wound center (WC) of the electrode assembly (110);
a can (130) having an internal space in which the electrode assembly (110) and the heat pipe (120) are positioned; and
a cap plate (140) that is coupled to an end of the can (130) to close and seal the can (130), the cap plate (140) being connected to the heat pipe (120), and
wherein the cooling device (200) comprises a chiller (210) that contacts an outer surface of the cap plate (140).
